# EUROPÄISCHE PATENTSCHRIFT

(11) **EP 2 946 658 B1**
(45) Veröffentlichungstag und Bekanntmachung des Hinweises auf die Patenterteilung: **01.08.2018**
(21) Anmeldenummer: 14169574.2
(22) Anmeldetag: 23.05.2014
(51) Int. Cl.: A01K 5/02, A01K 9/00

(54) **Milchwagen zur Fütterung von Nutztieren**
Milk cart for feeding livestock
Charrette de lait destinée à l'alimentation de bétail

(43) Veröffentlichungstag der Anmeldung: 25.11.2015
(73) Patentinhaber: Holm, Hans Joachim, 24784 Westerrönfeld (DE); Laue, Hans-Joachim, Prof. Dr., 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(56) Entgegenhaltungen:
- DE-U1-202005 012 843
- FR-A1- 2 521 403
- GB-A- 1 100 974

## Beschreibung

Die Erfindung betrifft einen Milchwagen zur Fütterung von Nutztieren mit einem Behälter zur Aufnahme eines Futtermittels, einer Abgabeeinrichtung zum Abgeben von Futtermittel aus dem Behälter, einer Pumpe, die mit dem Behälter und der Abgabeeinrichtung verbunden ist, einem Rührwerk, das eine in dem Behälter angeordnete Rühreinrichtung und einen elektrischen Antrieb aufweist, und einer elektronischen Steuerung.

Ein solcher Milchwagen ist beispielsweise in der Druckschrift DE 20 2005 012 843 U1 beschrieben. Bei dem Futtermittel handelt es sich insbesondere um Milch, die aus Milchpulver und Wasser angerührt wird. Dies geschieht in dem Behälter des Milchwagens, in den Milchpulver und Wasser eingegeben und mit dem Rührwerk miteinander vermischt werden. Die genannte Druckschrift schlägt zum Anmischen der Milch außerdem vor, die Milch mithilfe der Pumpe kontinuierlich umzuwälzen, wobei die Milch über die Abgabeeinrichtung in den Behälter zurückgeführt wird. Aus der Druckschrift EP 1 897 438 A2 ist ein Milchwagen mit einer integrierten Heizeinrichtung zum Pasteurisieren und Temperieren der Milch bekannt geworden. Damit die Milch zu einer Fütterungszeit die gewünscht Temperatur aufweist, kann ein Benutzer die Menge der zu temperierenden Milch manuell eingeben. Alternativ kann der Milchwagen hierzu einen Füllstandsmesser aufweisen.

Aus der Druckschrift FR 2 521 403 A1 ist eine stationäre Vorrichtung zur Fütterung von Nutztieren bekannt geworden, bei der in einem Behälter ein Futtermittel angemischt wird. Eine Steuerung erfasst mit Hilfe einer Sonde einen Füllstand des Behälters und schließt bei Unterschreiten eines minimalen Füllstands ein Magnetventil, das den Behälter mit einer Anzahl von Saugnuckeln verbindet. Anschließend wird mit Hilfe eines von der Steuerung angesteuerten Rührwerks neues Futtermittel in dem Behälter angemischt. Wird über mindestens zwei Anmischzyklen dauerhaft ein Füllstand unterhalb des minimalen Füllstands erfasst, werden eine Motor des Rührwerks sowie ein Motor einer Zuführeinrichtung für Milchpulver außer Betrieb gesetzt und es wird ein Alarm ausgelöst.

Davon ausgehend ist es die Aufgabe der Erfindung, bei einem Milchwagen der eingangs genannten Art den Anmischvorgang des Futtermittels zu verbessern.

Diese Aufgabe wird gelöst durch den Milchwagen mit den Merkmalen des Anspruchs 1. Vorteilhafte Ausgestaltungen sind in den sich anschließenden Unteransprüchen angegeben.

Der Milchwagen dient zur Fütterung von Nutztieren und hat
- einen Behälter zur Aufnahme eines Futtermittels,
- eine Abgabeeinrichtung zum Abgeben von Futtermittel aus dem Behälter,
- eine Pumpe, die mit dem Behälter und der Abgabeeinrichtung verbunden ist,
- ein Rührwerk, das eine in dem Behälter angeordnete Rühreinrichtung und einen elektrischen Antrieb aufweist,
- eine elektronische Steuerung, die dazu ausgebildet ist, den elektrischen Antrieb des Rührwerks anzusteuern,
- eine Information über einen Füllstand des Behälters auszuwerten und
- beim Ansteuern des elektrischen Antriebs des Rührwerks automatisch bei einem ersten Füllstand eine erste Rührintensität und bei einem zweiten Füllstand, der niedriger ist als der erste Füllstand, eine zweite Rührintensität vorzugeben, die niedriger ist als die erste Rührintensität.

Die Erfindung beruht auf der Erkenntnis, dass sowohl bei Verwendung eines Rührwerks als auch bei einem Zurückführen des Futtermittels über die Abgabeeinrichtung in den Behälter unter Umständen Luft in das Futtermittel gelangt, sodass es zu einer Schaumbildung kommt. Hierdurch wird sowohl eine gleichmäßige Durchmischung des Futtermittels als auch eine exakte Dosierung der mit der Abgabeeinrichtung abgegebenen Futtermittelmengen beeinträchtigt. Der Erfinder hat weiter beobachtet, dass das unerwünschte Unterrühren von Luft durch die Rühreinrichtung verstärkt bei niedrigem Füllstand im Behälter auftritt.

Daher wird bei der Erfindung eine Füllstandsinformation im Behälter herangezogen. Eine elektronische Steuerung, die den elektrischen Antrieb des Rührwerks steuert, wertet diese Information aus und gibt gezielt eine Rührintensität für den Rührvorgang vor. Bei relativ niedrigem Füllstand wird die Rührintensität verringert, sodass ein Unterrühren von Luft vermieden wird. Bei relativ hohem Füllstand kann mit höherer Rührintensität angemischt werden, sodass auch große Futtermittelmengen in kurzer Zeit vollständig durchmischt werden. Es können also große und kleinere Mengen Futtermittel ohne unerwünschte Schaumbildung effektiv zubereitet werden. Ebenso ist es möglich, anfänglich große Mengen Futtermittel in kurzer Zeit anzumischen und mit dem Rührwerk auch bei absinkendem Füllstand in einem durchmischten Zustand zu halten, ohne Luft unterzurühren. Die Rührintensität kann so gewählt werden, dass sie sowohl bei dem ersten als auch bei dem zweiten Füllstand nicht zu einem Unterrühren von Luft in einem unerwünschten Ausmaß führt. Insbesondere in Verbindung mit einer automatischen Dosiersteuerung kann dies wichtig sein, um bei jedem Füllstand perfekt zubereitetes Futtermittel exakt entsprechend den vorgegebenen Dosiermengen abgeben zu können.

Der Milchwagen kann insbesondere zum Betrieb der Pumpe eine Batterie aufweisen, die einen netzunabhängigen Betrieb ermöglicht. Das Rührwerk kann ebenfalls aus dieser Batterie gespeist werden, alternativ und/oder zusätzlich auch aus einem Stromnetz. Der Milchwagen kann zusätzlich einen elektrischen Fahrantrieb aufweisen, der ebenfalls aus der Batterie gespeist werden kann.

In einer Ausgestaltung ist die elektronische Steuerung dazu ausgebildet, die Rührintensität in einer Vielzahl von Stufen oder stufenlos an einen aktuellen Füllstand anzupassen, sodass ein Unterrühren von Luft vermieden wird. Durch diese Anpassung der Rührintensität stufenlos oder in einer Vielzahl von beispielsweise fünf oder mehr relativ kleinen Stufen an den aktuellen Füllstand wird bei jedem Füllstand eine schnelle und gründliche Durchmischung erreicht, ohne dass Luft untergerührt wird. Die Zuordnung der Rührintensitäten zu dem aktuellen Füllstand kann zum Beispiel in Form einer mathematischen Funktion in der elektronischen Steuerung hinterlegt sein oder in Form einer Tabelle. Die Funktion bzw. die Werte der Tabelle können beispielsweise experimentell ermittelt worden sein.

In einer Ausgestaltung ist die elektronische Steuerung dazu ausgebildet, zum Vorgeben einer bestimmten Rührintensität eine Dauer eines Rührvorgangs und/oder einen zeitlichen Abstand zwischen zwei Rührvorgängen und/oder eine Leistung des elektrischen Antriebs anzupassen. Eine Analyse des Anmischvorgangs mithilfe des Rührwerks hat ergeben, dass es insbesondere dann zum Unterrühren von Luft kommt, wenn sich nach längerem Betrieb des Rührwerks zu einer Rotation des Futtermittels mit Ausbildung eines Trichters oder Strudels an der Flüssigkeitsoberfläche kommt, dessen tiefster Punkt bis zur Rühreinrichtung herabreicht. Die Ausbildung eines solchen Trichters oder Strudels bei einem bestimmten Füllstand wird begünstigt durch besonders langes, kontinuierliches Rühren, durch kurze Abstände zwischen zwei Rührvorgängen bei einem Intervallbetrieb des Rührwerks und/oder durch hohe elektrische Leistungen und infolgedessen Drehzahlen der Rühreinrichtung. Durch geeignete Beeinflussung jedes der genannten Parameter oder einer Kombination daraus kann somit das Unterrühren von Luft wirksam verhindert werden.

In einer Ausgestaltung ist die elektronische Steuerung dazu ausgebildet, die Pumpe zum Abgeben von Futtermittel über die Abgabeeinrichtung anzusteuern, eine Fördermenge der Pumpe zu erfassen und die Information über den Füllstand ausgehend von einem vorgegebenen Startwert nach Maßgabe der erfassten Fördermenge zu aktualisieren. In dieser Ausgestaltung kann der Startwert beispielsweise beim Befüllen des Behälters manuell eingegeben werden. Ab diesem Zeitpunkt liegt in der elektronischen Steuerung dann stets eine Information über den aktuellen Füllstand vor. Diese wird bei der Vorgabe der Rührintensität berücksichtigt. Die Fördermenge der Pumpe kann beispielsweise durch Erfassen einer Anzahl von Drehungen des elektrischen Antriebs der Pumpe oder einer Dauer des Pumpenbetriebs erfasst werden. Verfügt der Milchwagen über eine kalibrierte Dosiersteuerung, kann auch einfach die Anzahl der Dosiervorgänge und die jeweilige Dosiermenge ausgewertet werden.

In einer Ausgestaltung weist der Milchwagen einen Füllstandssensor auf, der mit der elektronischen Steuerung verbunden ist und die Information über den Füllstand zur Verfügung stellt. Der Füllstandssensor kann laufend eine aktuelle Information über den Füllstand liefern. Alternativ kann er insbesondere zur Erfassung des genannten Startwerts herangezogen werden.

In einer Ausgestaltung ist der Füllstandssensor ein Staudrucksensor. Der Staudrucksensor misst den füllstandabhängigen statischen Druck vorzugsweise im Bereich des Behälterbodens. Auf diese Weise kann der Füllstand im Behälter sehr genau erfasst werden. Ein weiterer Vorteil ist, dass Staudrucksensoren relativ unempfindlich gegen Verschmutzungen sind und dadurch auch im häufigen Kontakt mit dem Futtermittel sehr zuverlässig betrieben werden können.

In einer Ausgestaltung ist der Füllstandssensor in einer Saugleitung, die die Pumpe mit dem Behälter verbindet, angeordnet. Auf diese Weise kann der Füllstandssensor in einer besonders niedrigen Position, insbesondere unterhalb des Behälterbodens, angeordnet werden. Er liefert dadurch bis hin zu einer Restentleerung des Behälters aussagekräftige Füllstandsinformationen. Außerdem kann die ordnungsgemäße Befüllung der Saugleitung verifiziert und die Pumpe bei leerer Saugleitung rechtzeitig abgeschaltet werden.

In einer Ausgestaltung schließt eine Membran des Füllstandssensors bündig mit einer Wandung des Behälters oder der Saugleitung ab. Dies vereinfacht die Reinigung des Milchwagens im Bereich des Füllstandsensors.

In einer Ausgestaltung ist die elektronische Steuerung dazu ausgebildet, den zeitlichen Verlauf eines von dem elektrischen Antrieb aufgenommenen Stroms auszuwerten und bei einem plötzlichen Abfall des Stroms den Rührvorgang abzubrechen. Diese Ausgestaltung beruht auf der Erkenntnis, dass die Rühreinrichtung beim Unterrühren von Luft - insbesondere infolge der Ausbildung eines Trichters oder Strudels, wie vorstehend beschrieben - zu einer plötzlichen Verringerung der Leistungsaufnahme des elektrischen Antriebs führt. Hierauf kann die elektronische Steuerung mit einem sofortigen Stopp des Rührvorgangs reagieren, um das Unterrühren von Luft und die einhergehende Schaumbildung zu unterbinden.

In einer Ausgestaltung ist die elektronische Steuerung dazu ausgebildet, aus einer Dauer eines Rührvorgangs bis zu dem plötzlichen Abfall des Stroms die Füllstandsinformation abzuleiten. Bei dieser Ausgestaltung kann das Rührwerk zunächst solange betrieben werden, bis ein Unterrühren von Luft anhand des plötzlichen Abfalls des Stroms festgestellt wird. Diese Zeitdauer ist ein Maß für den Füllstand des Behälters. Im einfachsten Fall kann für unterschiedliche Füllstände experimentell ermittelt werden, nach welcher Zeit es bei Dauerbetrieb des Rührwerks erstmals zu einem Unterrühren von Luft kommt. Auf Grundlage dieser experimentellen Daten ist dann der Rückschluss von der Dauer des Rührvorgangs auf den zugehörigen Füllstand einfach möglich. Diese Vorgehensweise zur Ableitung der Füllstandsinformation eignet sich insbesondere zur Ermittlung des vorstehend genannten Startwerts. Auf einen gesonderten Füllstandssensor kann in diesem Fall verzichtet werden.

In einer Ausgestaltung ist die elektronische Steuerung dazu ausgebildet, nacheinander die folgenden Schritte auszuführen:
- Erfassen einer ersten Information über einen Füllstand,
- Ansteuern der Pumpe in einer vorgegebenen Weise,
- Erfassen einer zweiten Information über einen Füllstand,
- Kalibrieren einer Fördermenge der Pumpe auf Grundlage der erfassten Informationen über die Füllstände.

Die Steuerung führt also ein Verfahren zum Kalibrieren der Fördermenge aus. Dies ist insbesondere bei Verwendung eines präzisen Füllstandssensors ohne weiteres möglich und bildet eine zuverlässige Grundlage für ein exaktes Dosieren des Futtermittels. Das Ansteuern der Pumpe erfolgt in einer definierten Weise, beispielsweise für eine bestimmte Zeitdauer oder für eine bestimmte Anzahl von Umdrehungen eines Pumpenantriebs.

Nachfolgend wird die Erfindung anhand eines in zwei Figuren dargestellten Ausführungsbeispiels näher erläutert. Es zeigen:
- Fig. 1: einen erfindungsgemäßen Milchwagen in einer perspektivischen, geschnittenen Ansicht bei einem ersten Füllstand,
- Fig. 2: den Milchwagen aus Fig. 1 bei einem zweiten Füllstand und rotierendem Futtermittel.

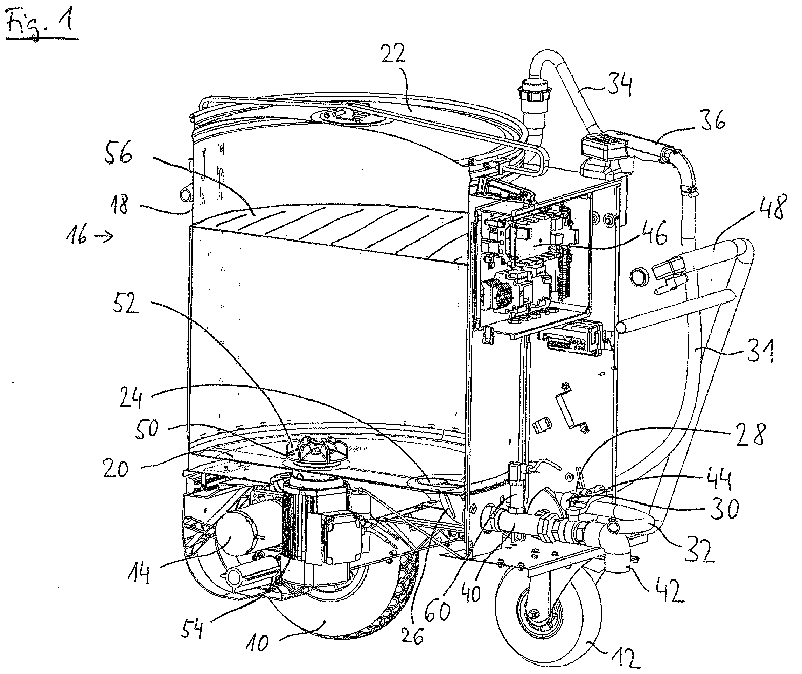

Der Milchwagen aus Fig. 1 weist ein Fahrgestell mit zwei Vorderrädern 10 und zwei Hinterrädern 12 auf, von denen wegen der Schnittführung der Darstellung jeweils nur eines zu sehen ist. Den Vorderrädern 10 ist ein elektrischer Fahrantriebsmotor 14 zugeordnet. Die Hinterräder 12 sind lenkbar.

Oberhalb des Fahrgestells befindet sich ein Behälter 16 aus Edelstahl. Er weist eine kreiszylindrische Wandung 18 und einen Behälterboden 20 auf. Nach oben wird er von einem Deckel 22 verschlossen.

Ein am tiefsten Punkt des Behälterbodens 20 angeordneter Auslauf 24 mündet in eine Saugleitung 26, an die eine Pumpe 28 angeschlossen ist. Ein druckseitiger Ausgang 30 der Pumpe 28 ist über einen nur stückweise dargestellten Schlauch 31 mit einer Abgabeeinrichtung 34, die einen Handgriff 36 und eine Bedieneinheit 38 aufweist, verbunden.

Die Pumpe 28 ist an ein T-Stück 40 der Saugleitung 26 angeschlossen. Das T-Stück 40 führt außerdem zu einem sich nach unten öffnenden Auslass 42, der zum Entleeren des Behälters 16 durch Öffnen eines Absperrhahns 44 verwendet werden kann.

Oberhalb der Hinterräder 12 weist der Milchwagen einen sich an den Behälter 16 anschließenden Kasten auf, in dem die Pumpe 28 sowie eine elektronische Steuerung 46 angeordnet sind. Außerdem befinden sich an diesem Ende des Milchwagens zwei Handgriffe 48 zum Schieben des Milchwagens, von denen nur einer dargestellt ist.

Ein Rührwerk weist eine Rühreinrichtung 50 in Form einer um eine annähernd vertikale Achse rotierenden Scheibe mit halbkreisförmigen, radial darauf angeordneten Rührelementen 52 auf. Die Rühreinrichtung 50 befindet sich etwa in der Mitte des im Wesentlichen kreisförmigen Bodens 20 des Behälters 16. Unterhalb der Rühreinrichtung 50 befindet sich ein elektrischer Antrieb 54 des Rührwerks, der von der elektronischen Steuerung 46 angesteuert wird. Die elektronische Steuerung 46 ist außerdem für die Steuerung der Pumpe 28 sowie für die Steuerung des Fahrantriebsmotors 14 zuständig. Durch entsprechendes Ansteuern der Pumpe 28 kann die elektronische Steuerung 46 insbesondere über die Abgabeeinrichtung 34 eine gewünschte Futtermittelmenge in eine Tränke oder einen Nuckeleimer dosieren.

Beim Ansteuern des Rührwerks gibt die elektronische Steuerung 46 außerdem eine Rührintensität vor. Hierzu steuert die elektronische Steuerung 46 im Ausführungsbeispiel den elektrischen Antrieb 54 bei einem ersten, beispielhaft in der Fig. 1 gezeigten, relativ hohen Füllstand 56 im Behälter alle 60 Sekunden für eine Dauer von 5 Sekunden mit voller elektrischer Leistung an. Die so definierte Rührintensität sorgt für eine gründliche Durchmischung des Futtermittels ohne Luft unterzurühren.

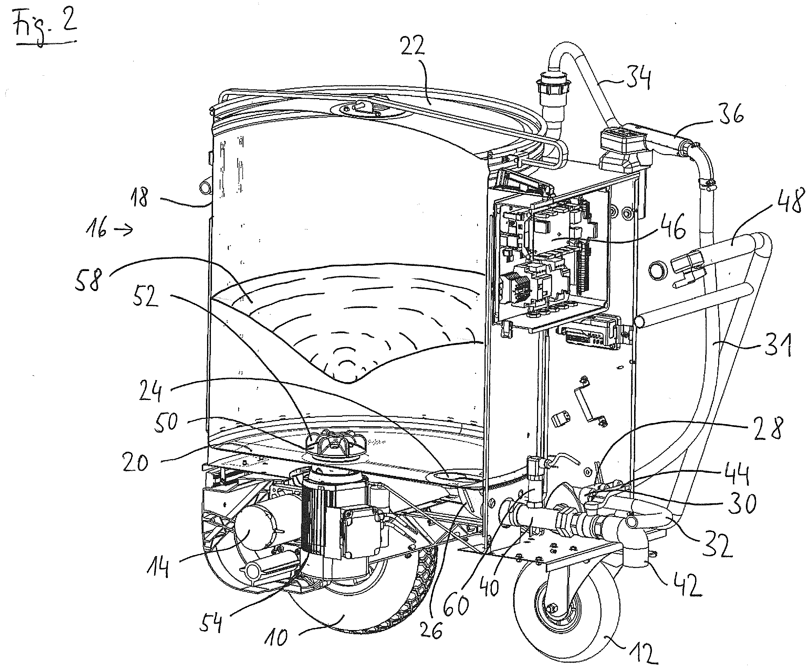

In der Fig. 2 ist derselbe Milchwagen bei bereits etwa zur Hälfte abgegebenem Futtermittel und dementsprechend niedrigerem, zweiten Füllstand 58 gezeigt. Außerdem ist die Oberfläche des Futtermittels wegen der Rotationsbewegung des gesamten Futtermittels im Behälter 16 trichterförmig ausgebildet und in der Mitte des Behälters 16 tief nach unten, bis nahe an die Rühreinrichtung 50 heran, eingezogen dargestellt. In dieser Situation besteht die Gefahr, dass bei einem weiteren Betrieb des Rührwerks Luft unter das Futtermittel untergerührt wird. Darum steuert die elektronische Steuerung 46 das Rührwerk so an, dass spätestens in der dargestellten Situation der Rührvorgang abgebrochen wird. Beispielsweise kann bei dem zweiten Füllstand 58 der elektrische Antrieb 54 mit folgender Rührintensität angesteuert werden: Betrieb mit voller elektrischer Leistung für eine Dauer von einer Sekunde alle zehn Sekunden.

Die für die geschilderte Steuerung des Rührwerks erforderliche Information über den Füllstand des Futtermittels im Behälter 16 wird im dargestellten Ausführungsbeispiel über einen Staudrucksensor 60, der im Bereich des T-Stücks 40 an die Saugleitung 26 angeflanscht ist, ermittelt. Der Staudrucksensor 60 ist ein Füllstandssensor, der mit der elektronischen Steuerung 46 verbunden ist. Er weist eine nicht dargestellte Membran auf, die bündig mit einer Innenseite der Saugleitung 26 abschließt.

## Patentansprüche

1. Milchwagen zur Fütterung von Nutztieren mit
• einem Behälter (16) zur Aufnahme eines Futtermittels,
• einer Abgabeeinrichtung (34) zum Abgeben von Futtermittel aus dem Behälter (16),
• einer Pumpe (28), die mit dem Behälter (16) und der Abgabeeinrichtung (34) verbunden ist, und
• einem Rührwerk, das eine in dem Behälter (16) angeordnete Rühreinrichtung (50) und einen elektrischen Antrieb aufweist, **gekennzeichnet durch**
• eine elektronische Steuerung (46), die dazu ausgebildet ist, den elektrischen Antrieb des Rührwerks anzusteuern,
• eine Information über einen Füllstand des Behälters (16) auszuwerten und
• beim Ansteuern des elektrischen Antriebs (54) des Rührwerks automatisch bei einem ersten Füllstand eine erste Rührintensität und bei einem zweiten Füllstand (58), der niedriger ist als der erste Füllstand, eine zweite Rührintensität vorzugeben, die niedriger ist als die erste Rührintensität.

2. Milchwagen nach Anspruch 1, **dadurch gekennzeichnet, dass** die elektronische Steuerung (46) dazu ausgebildet ist, die Rührintensität in einer Vielzahl von Stufen oder stufenlos an einen aktuellen Füllstand (56) anzupassen, so dass ein Unterrühren von Luft vermieden wird.

3. Milchwagen nach Anspruch 1 oder 2, **dadurch gekennzeichnet, dass** die elektronische Steuerung (46) dazu ausgebildet ist, zum Vorgeben einer bestimmten Rührintensität eine Dauer eines Rührvorgangs und/oder einen zeitlichen Abstand zwischen zwei Rührvorgängen und/oder eine Leistung des elektrischen Antriebs (54) anzupassen.

4. Milchwagen nach einem der Ansprüche 1 bis 3, **dadurch gekennzeichnet, dass** die elektronische Steuerung (46) dazu ausgebildet ist, die Pumpe (28) zum Abgeben von Futtermittel über die Abgabeeinrichtung (34) anzusteuern, eine Fördermenge der Pumpe (28) zu erfassen und die Information über den Füllstand ausgehend von einem vorgegebenen Startwert nach Maßgabe der erfassten Fördermenge zu aktualisieren.

5. Milchwagen nach einem der Ansprüche 1 bis 4, **dadurch gekennzeichnet, dass** der Milchwagen einen Füllstandssensor aufweist, der mit der elektronischen Steuerung (46) verbunden ist und die Information über den Füllstand (56) zur Verfügung stellt.

6. Milchwagen nach Anspruch 5, **dadurch gekennzeichnet, dass** der Füllstandssensor ein Staudrucksensor (60) ist.

7. Milchwagen nach Anspruch 5 oder 6, **dadurch gekennzeichnet, dass** der Füllstandssensor in einer Saugleitung (26), die die Pumpe (28) mit dem Behälter (16) verbindet, angeordnet ist.

8. Milchwagen nach einem der Ansprüche 5 bis 7, **dadurch gekennzeichnet, dass** eine Membran des Füllstandssensors bündig mit Wandung (18) des Behälters (16) oder der Leitung abschließt.

9. Milchwagen nach einem der Ansprüche 1 bis 8, **dadurch gekennzeichnet, dass** die elektronische Steuerung (46) dazu ausgebildet ist, den zeitlichen Verlauf eines von dem elektrischen Antrieb (54) aufgenommenen Stroms auszuwerten und bei einem plötzlichen Abfall des Stroms den Rührvorgang abzubrechen.

10. Milchwagen nach Anspruch 9, **dadurch gekennzeichnet, dass** die elektronische Steuerung (46) dazu ausgebildet ist, aus einer Dauer eines Rührvorgangs bis zu dem plötzlichen Abfall des Stroms die Füllstandsinformation abzuleiten.

11. Milchwagen nach einem der Ansprüche 1 bis 10, **dadurch gekennzeichnet, dass** die elektronische Steuerung (46) dazu ausgebildet ist, nacheinander die folgenden Schritte auszuführen:
• Erfassen einer ersten Information über einen Füllstand (56),
• Ansteuern der Pumpe (28) in einer vorgegebenen Weise,
• Erfassen einer zweiten Information über einen Füllstand (58),
• Kalibrieren einer Fördermenge der Pumpe (28) auf Grundlage der erfassten Informationen über die Füllstände.

## Claims

1. A milk float for feeding livestock, with
• a container (16) for the accommodation of a feedstuff,
• a delivery device (34) for the delivery of feedstuff from the container (16),
• a pump (28), which is connected to the container (16) and to the delivery device (34), and
• an agitator, which comprises a stirring device (50) arranged in the container (16) and an electric drive, **characterised by**
• an electronic control unit (46), which is designed to command the electric drive of the agitator,
• to analyse an information concerning the filling level of the container (16), and
• in the control of the electric drive (54) of the agitator, automatically prescribing a first stirring intensity at a first filling level and a second stirring intensity which is lower than the first stirring intensity at a second filling level (58) which is lower than the first filling level.

2. The milk float according to claim 1, **characterised in that** the electronic control unit (46) is designed to adapt the stirring intensity to an actual filling level (56) in a plurality of steps or continuously, so that stirring in air is avoided.

3. A milk float according to claim 1 or 2, **characterised in that** the electronic control unit (46) is designed to adapt a duration of a stirring process and/or a distance in time between two stirring processes and/or a power of the electric drive (54) in order to prescribe a defined stirring intensity.

4. A milk float according to any one of the claims 1 to 3, **characterised in that** the electronic control unit (46) is designed to command the pump (28) for delivering feedstuff via the delivery device (34), to detect a delivery rate of the pump (28) and to update the information concerning the filling level according to the detected delivery rate, starting from a given starting value.

5. A milk float according to any one of the claims 1 to 4, **characterised in that** the milk float comprises a filling level sensor, which is connected to the electronic control unit (46) and provides the information concerning the filling level (56).

6. The milk float according to claim 5, **characterised in that** the filling level sensor is a dynamic pressure sensor (60).

7. A milk float according to claim 5 or 6, **characterised in that** the filling level sensor is arranged in a suction line (26) which connects the pump (28) with the container (16).

8. A milk float according to any one of the claims 5 to 7, **characterised in that** a membrane of the filling level sensor is flush with the wall (18) of the container (16) or of the line.

9. A milk float according to any one of the claims 1 to 8, **characterised in that** the electronic control unit (46) is designed to analyse the course in time of a current taken up by the electric drive (54), and to stop the stirring process when there is a sudden decline of the current.

10. The milk float according to claim 9, **characterised in that** the electronic control unit (46) is designed to deduce the filling level information from the duration of a stirring process up to the sudden decline of the current.

11. A milk float according to any one of the claims 1 to 10, **characterised in that** the electronic control unit (46) is designed to execute consecutively the following steps:
• detecting a first information concerning a filling level (56),
• controlling the pump (28) in a prescribed way,
• detecting a second information concerning a filling level (58),
• calibrating a delivery rate of the pump (28), based on the detected information concerning the filling levels.

## Revendications

1. Charrette de lait pour l'alimentation de bétail, avec
• un conteneur (16) pour recevoir un aliment,
• un dispositif de décharge (34) pour la décharge d'aliments du conteneur (16),
• une pompe (28), qui est reliée au conteneur (16) et au dispositif de décharge (34), et
• un agitateur, qui comporte un moyen d'agitation (50) arrangé dans le conteneur (16) et un entraînement électrique, **caractérisé par**
• une commande électronique (46), qui est conçue pour commander l'entraînement électrique de l'agitateur,
• analyser une information concernant le niveau de remplissage du conteneur (16), et
• dans la commande de l'entraînement électrique (54) de l'agitateur, spécifier de manière automatique une première intensité d'agitation dans un premier niveau de remplissage, et une deuxième intensité d'agitation plus basse que la première intensité d'agitation dans un deuxième niveau de remplissage (58) qui est plus bas que le premier niveau de remplissage.

2. Charrette de lait selon la revendication 1, **caractérisée en ce que** la commande électronique (46) est conçue à adapter l'intensité d'agitation à un niveau de remplissage actuel (56) dans une multitude d'étapes ou continûment, de sorte que l'incorporation d'air est évitée.

3. Charrette de lait selon la revendication 1 ou 2, **caractérisée en ce que** la commande électronique (46) est conçue à adapter une durée d'un procès d'agitation et/ou un intervalle de temps entre deux procès d'agitation et/ou une puissance de l'entraînement électrique (54) pour fixer une intensité d'agitation définie.

4. Charrette de lait selon l'une quelconque des revendications 1 to 3, **caractérisée en ce que** la commande électronique (46) est conçue à commander la pompe (28) pour délivrer de l'aliment via le dispositif de décharge (34), à détecter un débit de la pompe (28) et à actualiser l'information concernant le niveau de remplissage, en procédant d'une valeur initiale selon le débit détecté.

5. Charrette de lait selon l'une quelconque des revendications 1 to 4, **caractérisée en ce que** la charrette de lait comporte un capteur du niveau de remplissage, qui est relié à la commande électronique (46) et met à disposition l'information concernant le niveau de remplissage (56).

6. Charrette de lait selon la revendication 5, **caractérisée en ce que** le capteur du niveau de remplissage est un capteur de la pression dynamique (60).

7. Charrette de lait selon la revendication 5 ou 6, **caractérisée en ce que** le capteur du niveau de remplissage est arrangé dans une conduite d'aspiration (26) qui relie la pompe (28) au conteneur (16).

8. Charrette de lait selon l'une quelconque des revendications 5 à 7, **caractérisée en ce que** une membrane du capteur du niveau de remplissage est en affleurement avec la paroi (18) du conteneur (16) ou de la conduite.

9. Charrette de lait selon l'une quelconque des revendications 1 à 8, **caractérisée en ce que** la commande électronique (46) est conçue à analyser le déroulement chronologique d'un courant consommé par l'entraînement électrique (54), et à finir le procès d'agitation chez une défaillance soudaine du courant.

10. Charrette de lait selon la revendication 9, **caractérisée en ce que** la commande électronique (46) est conçue à déduire l'information concernant le niveau de remplissage de la durée d'un procédé d'agitation jusqu'à la chute soudaine du courant.

11. Charrette de lait selon l'une quelconque des revendications 1 à 10, **caractérisée en ce que** la commande électronique (46) est conçue à exécuter consécutivement les étapes suivantes:
• détecter une première information concernant un niveau de remplissage (56),
• commander la pompe (28) dans une manière prescrite,
• détecter une deuxième information concernant un niveau de remplissage (58),
• calibrer un débit de la pompe (28) sur la base des informations concernant les niveaux de remplissage détectés.
